# EUROPEAN PATENT APPLICATION

(11) **EP 2 594 908 A1**
(43) Date of publication of application: **22.05.2013**
(21) Application number: 11806448.4
(22) Date of filing: 04.07.2011
(51) Int. Cl.: G01F 1/66

(54) **ULTRASONIC FLOW RATE MEASUREMENT UNIT**

(30) Priority: 12.07.2010 JP 2010157454
(71) Applicant: Panasonic Corporation, Kadoma-shi Osaka 571-8501 (JP)
(72) Inventor: WATANABE, Aoi, Chuo-ku Osaka 540-6207 (JP); FUJI, Yuji, Chuo-ku Osaka 540-6207 (JP); NAKABAYASHI, Yuji, Chuo-ku Osaka 540-6207 (JP); SATOU, Masato, Chuo-ku Osaka 540-6207 (JP); GOTOU, Hirokazu, Chuo-ku Osaka 540-6207 (JP)
(74) Representative: Schwabe - Sandmair - Marx
(86) International application number: PCT/JP2011/003791
(87) International publication number: WO 2012/008111

(57) **Abstract**

The ultrasonic flaw-rate measurement unit of the invention includes a flow measurement path inside which fluid to be measured flows through and to which a case accommodating a pair of ultrasonic transducers is installed, a pair of ultrasonic transducers disposed in the flow measurement path, a measuring circuit substrate incorporating a propagation time measuring part measuring a propagation time between the ultrasonic transducer transmitter and receiver and a flow-rate calculating part calculating a flow rate of the fluid to be measured based on the propagation time measured by the propagation time measuring part, and a damping material filling an interior space of the case and covering the pair of ultrasonic transducers.

## Description

### TECHNICAL FIELD

This invention relates to an ultrasonic flow-rate measurement unit to be used for an ultrasonic flow-rate measurement device, the unit measuring propagation time of an ultrasonic wave signal by using a pair of ultrasonic transducer transmitter and receiver, thereby obtaining a flow rate of fluid to be measured such as air and gas.

### BACKGROUND ART

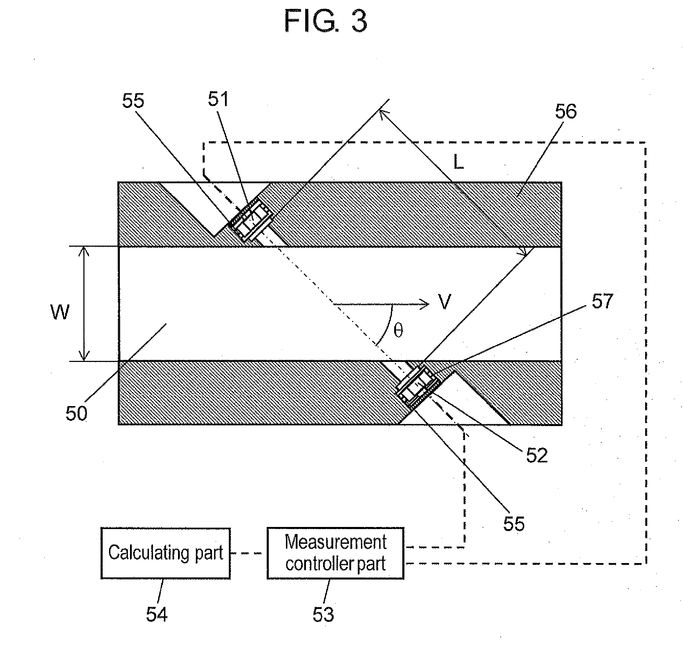

A conventional ultrasonic flow-rate measurement device is structured as illustrated in Fig. 3 for instance. Fig. 3 is a block diagram of the conventional ultrasonic flow-rate measurement device.

As shown in Fig. 3, the conventional ultrasonic flow-rate measurement device is composed of flow measurement path 50 in which fluid to be measured passes though, at least a pair of ultrasonic transducers 51 and 52 oppositely placed inside flow measurement path 50,transmitting and receiving an ultrasonic wave, measurement controller part 53 measuring propagation time of the ultrasonic wave between the ultrasonic transducers, and calculating part 54 calculating the flow rate of the fluid to be measured based on the signal from measurement controller part 53. Ultrasonic transducers 51 and 52 are composed of a ceiling, a side wall, a sustainer disposed on an outside of the side wall, and piezoelectric material attached to an inside wall of the ceiling. Vibration transmission suppressor 55 is composed of a damper coming into contact with the side wall of ultrasonic transducers 51 and 52 for reducing vibration of the side wall and a holder for holding the sustainer of ultrasonic transducers 51 and 52. Ultrasonic transducers 51 and 52 are attached into respective mounting hole 57 of flow path wall 56 of flow measurement path 50 through the holder of vibration transmission suppressor 55. (Refer to patent document 1, for an example)

However, with the conventional ultrasonic flow-rate measurement device, vibration transmission suppressor 55 made in a complicated shape to fittingly accept the shape of ultrasonic transducer has to be used to prevent unwanted ultrasonic vibration which becomes noise when measuring flow rate is transmitted to flow measurement path 50. Vibration transmission suppressor 55 holding the sustainer of ultrasonic transducers 51 and 52 is expensive and installation of ultrasonic transducers 51 and 52 into the hole of the wall is complicated, leaving a problem.

### Citation List

### Patent Literature

PTL 1: Unexamined Japanese Patent Publication Number 2001-159551

### SUMMARY OF THE INVENTION

In order to solve the above mentioned problem, the ultrasonic flow-rate measurement unit of the invention includes a flow measurement path inside which fluid to be measured flows through, a pair of ultrasonic transducers embedded in an upper stream and a lower stream of a same plane of the flow measurement path, a case accommodating the pair of ultrasonic transducers, a propagation time measuring part measures a propagation time for an ultrasonic wave signal transmitted by one of the pair of ultrasonic transducers to travel through the fluid to be measured, till received by the other of the pair of ultrasonic transducers, a flow-rate calculating part calculates a flow rate of the fluid to be measured based on the propagation time, and a damping material having a shock absorbing characteristic, filling an interior space of the case and covering the pair of ultrasonic transducers.

With this configuration, an ultrasonic vibration generated by the ultrasonic transducer transmitter is absorbed by the damping material having shock absorbing characteristic, preventing the ultrasonic vibration to be leaked into the flow measurement path (housing). Resultantly, propagation of unwanted propagating wave in the ultrasonic vibration affecting measuring performance of the ultrasonic flow-rate measurement unit is controlled, enhancing accuracy in measuring the flow rate of the fluid to be measured.

### BRIEF DESCRIPTION OF THE DRAWINGS

Fig. 1A is a cross sectional view of the ultrasonic flow-rate measurement unit according to a first exemplary embodiment of the present invention.
Fig. 1B is a perspective view of the ultrasonic flow-rate measurement unit according to the first exemplary embodiment
Fig. 2A is a cross section view of the ultrasonic flow-rate measurement unit according to a second exemplary embodiment of the present invention.
Fig. 2B is a perspective view of the ultrasonic flow-rate measurement unit according to the second exemplary embodiment.
Fig. 3 is a block diagram of a conventional ultrasonic flow-rate measurement device.

### DESCRIPTION OF EMBODIMENTS

Below, exemplary embodiments of the present invention will be explained referring to the drawings. The exemplary embodiments do not limit application of the present invention.

### FIRST EXEMPLARY EMBODIMENT

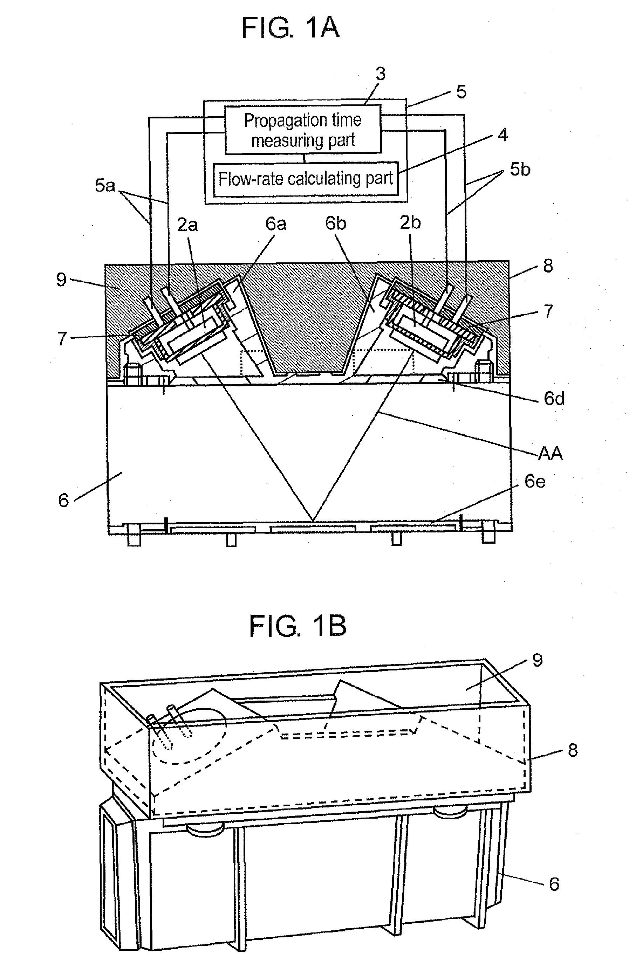

Following, the ultrasonic flow-rate measurement unit according to a first exemplary embodiment of the present invention is explained with reference to Figs. 1A and 1B. Fig. 1A is a cross sectional view of the ultrasonic flow-rate measurement unit according to the first exemplary embodiment of the present invention, and Fig. 1B is a perspective view of the ultrasonic flow-rate measurement unit according to the first exemplary embodiment.

As shown in Figs. 1A and 1B, the ultrasonic flow-rate measurement unit includes flow measurement path 6, a pair of ultrasonic transducers 2a and 2b incorporated in case 8, measuring circuit substrate 5, damping material 9 having a shock absorbing characteristic at least. Measuring circuit substrate 5 includes propagation time measuring part 3 and flow-rate calculating part 4 connected to the pair of ultrasonic transducers 2a and 2b with lead wires 5a and 5b. Case 8 is filled with damping material 9 which is elastic material having a vibration-proof characteristic such as silicon rubber, fluorine rubber, and fluorosilicone rubber having a superior temperature characteristic. The pair of ultrasonic transducers 2a and 2b are embedded in mounting parts 6a and 6b prepared in an upper stream and a lower stream of a same plane of flow measurement path 6 (a upper face 6d in Fig. 1A, for instance) with ultrasonic transducer fixture 7. The flow path is made of resin such as polybutylene terephthalate and polystyrene. Ultrasonic transducers 2a and 2b are fixed slanting each other with regard to flow direction of the fluid to be measured, gas for instance in flow measurement path 6, such that an ultrasonic wave signal including an ultrasonic vibration signal may enter the ultrasonic transducer receiver. Namely, the transducers are disposed so that an ultrasonic wave signal transmitted by one ultrasonic transducer (2a or 2b) is reflected by an inside face of flow measurement path 6 (lower face 6e in Fig. 1A, for instance) facing the pair of ultrasonic transducers 2a and 2b, and is received by the other of the pair of ultrasonic transducer (2b or 2a). In other words, the ultrasonic wave signal is transmitted by ultrasonic transducer 2a for instance, passes through propagation path in the V-shape (AA in Fig. 1A) and is received by ultrasonic transducer 2b. With this configuration, the propagation path of the ultrasonic wave signal is roughly doubled in length compared with the case wherein ultrasonic transducers 2a and 2b are placed facing each other in flow measurement path 6, enhancing accuracy in measuring the flow rate of the fluid to be measured. In addition to it, since the pair of ultrasonic transducers 2a and 2b are disposed in one side of the flow measurement path, ultrasonic transducers 2a and 2b and the controlling part including measuring circuit substrate 5 are consolidated into one piece, miniaturizing the flow-rate measurement unit.

Propagation time of the ultrasonic wave signal between ultrasonic transducers 2a and 2b travelling through the V-shape propagation path is measured by propagation time measuring part 3 of measuring circuit substrate 5. The flow rate of the fluid to be measured in flow measurement path 6 is calculated by flow-rate calculating part 4 based on the propagation time obtained by propagation time measuring part 3.

Case 8 is in a hollow rectangular shape, accommodating the pair of ultrasonic transducers 2a and 2b which is attached to flow measurement path 6 flowing the fluid to be measured. Case 8 is filled with damping material 9, covering the pair of ultrasonic transducers 2a and 2b. In this configuration, damping material 9 absorbs vibration of the ultrasonic wave from the ultrasonic transducer transmitter, preventing the vibration signal to propagate into flow measurement path 6. Further, damping material 9 filling the case applies coating to the pair of ultrasonic transducers 2a and 2b, enhancing moisture proof reliability.

In above configuration, propagation time measuring part 3 of measuring circuit substrate 5 measures propagation time of ultrasonic wave signal, from the ultrasonic wave signal is generated by ultrasonic transducer 2a, propagates through the fluid to be measured flowing inside flow measurement path 6, till it is received by ultrasonic transducer 2b. Then, flow-rate calculating part 4 of measuring circuit substrate 5 calculates the flow rate of the fluid to be measured based on propagation time obtained by propagation time measuring part 3 and an established calculation formula. In this configuration, the flow rate of the fluid to be measured is calculated

When the flow rate of the fluid to be measured is measured, since damping material 9 prevents noise-causing ultrasonic vibration propagates into flow measurement path 6, precision in measuring the flow rate is enhanced.

As described, with the ultrasonic flow-rate measurement unit of the exemplary embodiment, damping material 9 fills case 8 incorporating the pair of ultrasonic transducers 2a and 2b. Damping material 9 absorbs the ultrasonic vibration from the ultrasonic transducer transmitter, preventing the ultrasonic vibration propagates into flow measurement path 6. Propagation of the ultrasonic vibration to the ultrasonic transducer receiver through the housing of flow measurement path 6 such as housing propagation is thus prevented, enabling the ultrasonic flow-rate measurement unit to have an enhanced precision in measuring the flow rate of the fluid to be measured.

With the ultrasonic flow-rate measurement unit of the exemplary embodiment, material having a waterproof characteristic, silicon rubber, fluorine rubber or the like is employed as damping material 9, protecting the ultrasonic transducers 2a and 3b from moisture or vapor, providing the ultrasonic flow-rate measurement unit with a moisture proofing characteristic as well.

Still further, in the exemplary embodiment, flow measurement path 6 in which the fluid to be measured flows is made of resin, reducing the propagation of the ultrasonic wave through housing of flow measurement path 6 than when the path is made of metal, also enhancing measuring performance (measuring accuracy) of the fluid to be measured. When housing propagation of the ultrasonic vibration to flow measurement path 6 is small, flow measurement path 6 may as well be made of metal.

### SECOND EXEMPLARY EMBODIMENT

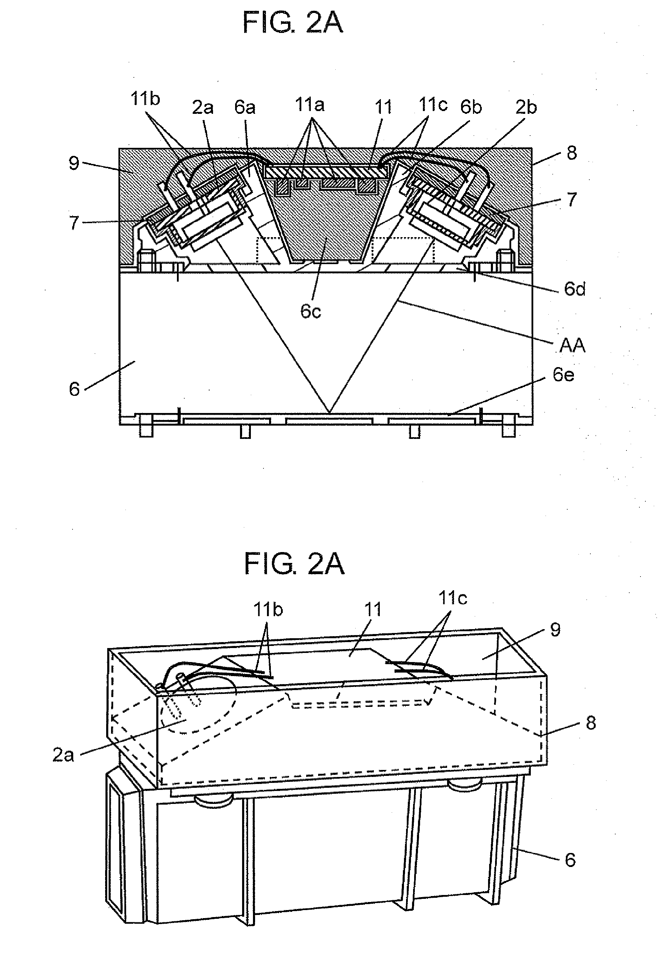

Following, the ultrasonic flow-rate measurement unit according to a second exemplary embodiment of the present invention is explained by using Figs. 2A and 2B. Fig. 2A is a cross section view of the ultrasonic flow-rate measurement unit according to the second exemplary embodiment of the present invention. Fig. 2B is a perspective view of the ultrasonic flow-rate measurement unit according to the exemplary embodiment.

As shown in Figs. 2A and 2B, the ultrasonic flow-rate measurement unit according to the exemplary embodiment is differed from the first exemplary embodiment, in which measuring circuit substrate 11 is disposed between the pair of ultrasonic transducers 2a and 2b accommodated in case 8, and measuring circuit substrate 11 and the pair of ultrasonic transducers 2a and 3b are covered with damping material 9. Other configuration, and working mechanism are identical to that of the first exemplary embodiment, so explanation in detail is omitted.

That is, as in Figs. 2A and 2B, measuring circuit substrate 11 incorporating propagation time measuring part 3 and flow-rate calculating part 4 composed of circuitry component 11a is disposed in space 6c formed between mounting part 6a of ultrasonic transducer 2a and mounting part 6b of ultrasonic transducer 2b. Case 8 is formed in a hollow rectangular shape, incorporating ultrasonic transducers 2a and 2b and a side of measuring circuit substrate 11 at least. Case 8 is filled with damping material 9, integrally coating the pair of ultrasonic transducers 2a and 2b and measuring circuit substrate 11 into one piece.

In this exemplary embodiment, the pair of ultrasonic transducers 2a and 2b and measuring circuit substrate 11 are disposed closely and they are coated into a piece. Thereby, work process is reduced than when ultrasonic transducers 2a and 2b and measurement circuit substrate 11 are separately coated. Hence, an ultrasonic flow-rate measurement unit having superior work efficiency and productivity is realized.

Further, in the exemplary embodiment, since the pair of ultrasonic transducers 2a and 2b and measuring circuit substrate 11 are closely disposed, lead wires 11b and 11c connecting ultrasonic transducer 2a and 2b and measuring circuit substrate 11 are short in length. With this configuration, wiring noise which otherwise might be caused with long lead wires 11b and 11c is prevented, thus degradation of measuring performance is prevented. Taking a countermeasure against wiring noise which might otherwise be needed with long lead wires 11b and 11c is unneeded, reducing constraint in design. Thereby, the ultrasonic flow-rate measurement unit having a high accuracy in measuring the flow rate of the fluid to be measured is provided.

Still further, in this exemplary embodiment, circuitry component 11a mounted on measuring circuit substrate 11 are disposed in space 6c formed between mounting parts 6a and 6b, thus space 6c is efficiently utilized, help miniaturizing the ultrasonic flow-rate measurement unit. Although not illustrated in Fig. 2, measuring circuit substrate 11 may be of a multilayer substrate and high profile components such as a capacitor and a coil may be mounted on the side of space 6c and low profile components such as surface mount components in the opposite side. With this arrangement, a high density measuring circuit substrate 11 may be achieved, enabling still further efficient use of the space.

In the exemplary embodiment, the pair of ultrasonic transducers 2a and 2b is explained to be placed on upper face 6d of flow measurement path 6, but this placement is not limited; the ultrasonic transducers may be placed on lower face 6e of flow measurement path 6 reflecting the ultrasonic wave signal with upper face 6d and measuring or the ultrasonic transducers may be placed on a side face of flow measurement path 6, as long as the pair of ultrasonic transducers 2a and 2b is placed on a same side of flow measurement path 6. Having this flexibility, the ultrasonic flow-rate measurement unit is endowed with a variety of usability.

In the exemplary embodiment, damping material is explained to be covering the whole body of the ultrasonic transducers, but this is not limited. The ultrasonic transducers may be covered only partially with a damping material as long as measuring accuracy of the flow rate of the fluid to be measured is maintained. This arrangement saves the amount of damping material, still raising work efficiency and productivity.

As explained, the ultrasonic flow-rate measurement unit of the present invention includes the flow measurement path inside which fluid to be measured flows through, the pair of ultrasonic transducers embedded in an upper stream and a lower stream of a same plane of the flow measurement path, the case accommodating the pair of ultrasonic transducers, the measuring circuit substrate incorporating the propagation time measuring part and the flow-rate calculating part; the propagation time measuring part measuring the propagation time for the ultrasonic wave signal transmitted by one of the pair of ultrasonic transducers to travel through the fluid to be measured, till received by the other of the pair of ultrasonic transducers, and the flow-rate calculating part calculates the flow rate of the fluid to be measured based on the propagation time, and the damping material having a shock absorbing characteristic filling an interior space of the case and covering the pair of ultrasonic transducers. In this configuration, the damping material having the shock absorbing characteristic absorbs the leakage of ultrasonic vibration of the ultrasonic wave signal generated by the ultrasonic transducer transmitter. With this arrangement, housing propagation is prevented or controlled greatly, enhancing precision in measuring the flow rate of the fluid to be measured. Damping material also provides the pair of ultrasonic transducers with a moisture proofing characteristic.

In the present invention, the measuring circuit substrate is disposed between the pair of ultrasonic transducers, in that the measuring circuit substrate and the pair of ultrasonic transducers are covered with damping material. With this arrangement, the pair of ultrasonic transducers and the measuring circuit substrate are closely placed and connected with short lead wires. That the components are connected with short lead wires and that they are integrally coated into one unit allow the ultrasonic flow-rate measurement unit to be made with less working process and less design constraint such as eliminating a necessity of taking a countermeasure against wiring noise of the lead wires to maintain measuring quality.

Further, with the present invention, damping material is made of rubber such as silicon rubber, fluorine rubber and fluorosilicone rubber having a shock absorbing characteristic. Since such damping material effectively absorbs the leakage of the ultrasonic vibration of the ultrasonic wave signal from the ultrasonic transducer transmitter, housing propagation is greatly prevented or controlled.

Still further, with the present invention, the ultrasonic wave signal transmitted by one of the pair of ultrasonic transducers is reflected by a surface of the flow measurement path facing the pair of ultrasonic transducers and is received by the other of the pair of ultrasonic transducers. Compared with the configuration wherein ultrasonic transducers 2a and 2b are oppositely placed in the opposite sides of flow measurement path 6, the propagation path of the ultrasonic wave signal of the present invention is made longer, doubled for instance, enhancing precision in measuring the flow rate of the fluid to be measured. Moreover, by placing the pair of ultrasonic transducers 2a and 2b in one side of the flow measurement path, ultrasonic transducers 2a and 2b and the controller including measuring circuit substrate 5 is integrated into a unit, miniaturizing the ultrasonic flow-rate measurement unit.

### INDUSTRIAL APPLICABILITY

Having an enhanced accuracy in measuring, as well as versatility and diversity, the ultrasonic flow-rate measurement unit of the present invention is useful for a variety of applications including a gas meter and a gaseous measuring instrument in a factory.

### REFERNCE MARKS IN THE DRAWINGS

| | |
|---|---|
| 2a, 2b, 51, 52 | ultrasonic transducer |
| 3 | propagation time measuring part |
| 4 | flow-rate calculating part |
| 5, 11 | measuring circuit substrate |
| 5a, 5b, 11b, 11c | lead wire |
| 6, 50 | flow measurement path |
| 6a, 6b | mounting part |
| 6c | space |
| 6d | upper face |
| 6e | lower face |
| 7 | ultrasonic transducer fixture |
| 8 | case |
| 9 | damping material (material having a shock absorbing characteristic) |
| 11a | circuitry component |
| 53 | measurement controller part |
| 54 | calculating part |
| 55 | vibration transmission suppressor |
| 56 | flow path wall |
| 57 | mounting hole |

## Claims

1. An ultrasonic flaw-rate measurement unit comprising:
a flow measurement path inside which fluid to be measured flows through;
a pair of ultrasonic transducers embedded in an upper stream and a lower stream of a same plane of the flow measurement path;
a case accommodating the pair of ultrasonic transducers
a measuring circuit substrate incorporating a propagation time measuring part and a flow-rate calculating part,
wherein the propagation time measuring part measures the propagation time for an ultrasonic wave signal transmitted by one of the pair of ultrasonic transducers to travel through the fluid to be measured, till received by the other of the pair of ultrasonic transducers,
wherein the flow-rate calculating part calculates a flow rate of the fluid to be measured based on the propagation time; and
a damping material having a shock absorbing characteristic, filling an interior space of the case and covering the pair of ultrasonic transducers.

2. An ultrasonic flow-rate measurement unit of claim 1,
wherein the measuring circuit substrate is disposed between the pair of ultrasonic transducers,
wherein the measuring circuit substrate and the pair of ultrasonic transducers are covered with the damping material having the shock absorbing characteristic.

3. An ultrasonic flow-rate measurement unit of claim 1,
wherein the ultrasonic wave signal transmitted by one of the pair of ultrasonic transducers is reflected by a surface of the flow measurement path facing the pair of ultrasonic transducers and is received by the other of the pair of ultrasonic transducers.
